# EUROPÄISCHE PATENTSCHRIFT

(11) **EP 3 158 048 B1**
(45) Veröffentlichungstag und Bekanntmachung des Hinweises auf die Patenterteilung: **28.03.2018**
(21) Anmeldenummer: 15741721.3
(22) Anmeldetag: 11.06.2015
(51) Int. Cl.: C11D 3/39, C11D 17/04, C11D 3/395, C11D 17/00

(54) **VOLLWASCHMITTELTUCH MIT TEMPERATURABHÄNGIGER AKTIVIERUNG DER WASCHAKTIVEN SUBSTANZEN**
HEAVY-DUTY DETERGENT SHEET WITH TEMPERATURE-DEPENDENT ACTIVATION OF THE DETERGENT SUBSTANCES
LESSIVE TOUS TEXTILES EN LINGETTE DONT LES SUBSTANCES DÉTERGENTES SONT ACTIVÉES DE MANIÈRE VARIABLE EN FONCTION DE LA TEMPÉRATURE

(30) Priorität: 17.06.2014 DE 102014008586
(43) Veröffentlichungstag der Anmeldung: 26.04.2017
(73) Patentinhaber: Coin Consulting UG (Haftungsbeschränkt), 58706 Menden (DE)
(72) Erfinder: MAUSBERG, Marcus, 58708 Menden (DE)
(74) Vertreter: Gruber, Daniel
(86) Internationale Anmeldenummer: PCT/DE2015/000280
(87) Internationale Veröffentlichungsnummer: WO 2015/192822

(56) Entgegenhaltungen:
- DE-A1- 10 361 170
- DE-A1-102009 028 002
- US-B1- 6 673 763

## Beschreibung

### Gebiet der Erfindung

Die vorliegende Erfindung betrifft Vollwaschmitteltücher, bei denen die Aktivierung der waschaktiven Substanzen temperaturabhängig erfolgt, sowie ein Verfahren zu deren Herstellung.

### Hintergrund der Erfindung und Stand der Technik

Seit Anbeginn der Menschheit besteht das Streben nach Hygiene. Schließlich stellt die Hygiene im Alltag den Menschen eine gewichtige Komponente dar. Der Hygienegedanke des Menschen besteht in erster Linie in der Erhaltung der Gesundheit. Mit der weiteren Entwicklung der Möglichkeiten gerieten neben den grundreinigenden Reinigungseffekten der Duft sowie die Verbesserung der Reinigungsleistungen durch die verwendeten Rohstoffmischungen in den Fokus. Die Optimierung der Reinigungsleistung kennzeichnet sich insbesondere durch die Möglichkeit der Verlängerung eines hygienisch reinen Zustandes sowie einer Verbesserung des Reinigungsgrades.

Heutzutage kann die Hygiene in die Bereiche der Körper-, Oberflächen- und Textilhygiene unterteilt werden. Letztere wird differenziert in die Anwendung nach Material und Farbe des Textils. Spätestens in den 90'er Jahren des 20ten Jahrhunderts ist auch ökologische Reinigung in das Bewusstsein der Konsumenten getreten. Dabei ist es wünschenswert, einerseits die bereits erreichten Vorzüge eines Waschmittels zu erhalten und andererseits weitere innovative und ökologisch sinnvolle Produktlösungen zu erfinden.

Mit Beginn industriellen Produktion von Waschmitteln wurden diese als Pulver realisiert. Ein Waschmittelpulver stellt noch heute eine Mischung aus unterschiedlichen waschaktiven Substanzen dar.

Mit dem Fortschritt bei der Entwicklung von Waschmitteln fanden Enzyme und weitere neue tensidische Verbindungen ihren Einzug in dieses Marktsegment. Neben den zur Reinigung erforderlichen Substanzen werden heutzutage große Mengen an Füllstoff hinzugegeben. Dies führt dazu, dass eine Änderung im Dosierungsverhalten des Verbrauchers nicht erforderlich wurde. Erste Versuche, auf die Füllstoffe zu verzichten, führten zu einer Überdosierung der Tenside bedingt durch die gewohnte Anwendung seitens der Konsumenten.

Es folgte die Einführung der Flüssigwaschmittel, die rückstandsfreier zu dosieren sind und eine physikalische Alternative zu der Feststoffmischung des Waschmittels darstellen. Allerdings konnten die Flüssigwaschmittel in ihren reinigenden Eigenschaften bis heute nicht das Reinigungsniveau eines Vollwaschmittels (also einer Feststoffmischung) erreichen. Dies findet seine Begründung in der Limitierung eines Flüssigwaschmittels auf flüssige oder gut in Wasser lösliche Komponenten. Die entscheidende dabei fehlende Substanz in einem Flüssigwaschmittel stellt die Gruppe der Zeolithe dar. Diese unterstützen die Schmutzadsorption, sowie die Glanzbildung/Farbechtheit bei der Anwendung.

Einen weiteren wichtigen Faktor für die optimale Reinigung unter Einsatz einer handelsüblichen Waschmachine stellt die rechtzeitige Dosierung der waschaktiven Substanzen innerhalb des Waschprozesses dar. Mit üblichen Waschmitteln (Pulverwaschmittel und Flüssigwaschmittel) wird dies über das Waschprogramm realisiert. Die Dosierkammern ermöglichen eine zeitliche Differenzierung in der Hinzugabe von Weichspüler und Waschmittel des Vor- und Hauptwaschgangs.

Ein derzeitiger Produkttrend liegt in der Art und Weise der Portionierung des Waschmittels. Dies kann zum einen geschehen durch die Verpackung eines Flüssigwaschmittels in kleinen Polymerbeuteln. Hier werden sämtliche waschaktiven Substanzen zum Zeitpunkt der Auflösung des Polymerbeutels freigesetzt.

Eine andere physikalische Modifikation des Waschmittels besteht im Abmischen eines Waschmittels mit einem Fettalkohol, sodass gewünschte Formen erzielt werden können. Hier erfolgt die Freisetzung der waschaktiven Substanzen über die Auflösung der Struktur der Waschmittel-/Fettalkoholabmischung.

Wie bereits in der DE 10 2010 060 126 A1 beschrieben, kann auch ein Mehrphasenprodukt beschrieben werden. Das dort offenbarte Waschmitteltuch zeichnet sich durch die Kombination eines Trägersubstrats mit einer flüssigen Tränklösung (Zweiphasenprodukt) aus. Aufgrund des bevorzugten Einsatzes von hydrophilen Trägersubstraten und Tränklösungen liegt hier ein Auswaschprozess vor, der mit der - oben bereits im Zusammenhang mit den in kleinen Polymerbeuteln verpackten Flüssigwaschmitteln erwähnten - Auflösung der Polymerbeutel vergleichbar ist. Lediglich die Aktivierung konnte zu einem früheren Zeitpunkt festgestellt werden.

Die DE 10 2013 014 015 offenbart ein weiter optimiertes Produkt, bei dem eine Dispersion auf ein bei Raumtemperatur festes Trägersubstrat appliziert wurde. Durch den erstmaligen Einsatz einer Dispersion konnte eine Reinigungsleistung mit den Merkmalen eines Waschmittelpulvers (z.B. Zeolithe, Schichtsilikate, etc.) realisiert werden. Hier wurden primär hydrophobe Trägersubstrate eingesetzt, da auch die Waschmitteldispersion auf Grund des höheren Anteils der waschaktiven Substanzen im Verhältnis zu dem Zweiphasensystem eine hydrophobe Eigenschaft aufweist. Dadurch konnte eine Aktivierung der waschaktiven Substanzen (Phasenaustrittsdiffusion) über einen längeren Zeitraum beobachtet werden.

Bei der Reinigung spielen Enzyme eine wichtige Rolle. Sie erfüllen bei der Reinigung den Zweck, Anschmutzungen in den Schmutzgruppen Stärke, Eigelb, Eiweiß, Blut, Fett, Butter, Öl, etc. zu entfernen. Eine gleichwertige Schmutzentfernung in diesen Kategorien kann durch den alleinigen Einsatz von Tensiden nicht erzielt werden, die lediglich die Bindung und den Abtransport dieser Verunreinigungen von der jeweiligen textilen Oberfläche bewirken. Bisher können bei Pulverwaschmitteln zwar gleichermaßen Bleichmittel (Sauerstoffdonatoren und deren Aktivatoren) und Enzyme innerhalb einer Formulierung verwendet werden, da diese Edukte trotz ihrer chemischen Unverträglichkeit in der physikalischen Form eines Pulvers in fester und somit zunächst passiver Form vorliegen. Durch das Lösen dieser Komponenten entsteht allerdings eine Wechselwirkung, die dazu führt, dass die Bleichmittel die Enzyme zersetzen und somit inaktivieren können. Flüssigwaschmittel wiederum erlauben in der handelsüblichen Form sogar nur die Beigabe von Enzymen oder Bleichmitteln (Sauerstoffdonatoren und deren Aktivatoren), jedoch keine Kombination dieser beiden Substanzklassen.

Die DE 103 61 170 A1 offenbart ein Verfahren zur Herstellung eines mit mindestens einer organischen Peroxycarbonsäure, insbesondere Imidoperoxycarbonsäure, beladenen mehrschichtigen Kapselsystems, wobei auf eine in Form fester Teilchen vorliegende organische Peroxycarbonsäure, insbesondere Imidoperoxycarbonsäure, aufeinanderfolgend mindestens zwei voneinander verschiedene Hüllschichten jeweils auf Basis mindestens eines Polyelektrolyten und/oder ionischen Tensids aufgebracht werden, so daß ein Kapselsystem resultiert, welches mindestens eine organische Peroxycarbonsäure, insbesondere Imidoperoxycarbonsäure, in einer mehrschichtigen Kapselhülle aus mindestens zwei Hüllschichten umfaßt.

Die US 6,673,763 B1 offenbart eine Flüssigzusammensetzung mit festen Bestandteilen, umfassend eine feste Wachsmatrix, wobei ein aktiver Bestandteil verteilt wird.

Die DE 2009 028 002 A1 offenbart einen Waschhilfsmittelartikel, umfassend ein wasserunlösliches textiles Substrat und ein bleichmittelhaltiges Waschhilfsmittel in Form einer Zusammensetzung, die verfestigt auf dem Substrat vorliegt, wobei die Waschhilfsmittel-Zusammensetzung zur Fixierung der Bleichmittelpartikel ein filmbildendes Polymer aufweist. Die Aufgabe der vorliegenden Erfindung liegt somit in der Realisierung eines Waschmittels, bei dem Bleichmittel (Sauerstoffdonatoren und deren Aktivatoren) und Enzyme ohne Auswirkung ihrer gegenseitigen Unverträglichkeit eingesetzt werden können.

### Zusammenfassung der Erfindung

Es ist ein Ziel der vorliegenden Erfindung, ein Vollwaschmitteltuch vorzusehen, bei dem die unverträglichen Substanzklassen Enzyme einerseits und Bleichmittel (Sauerstoffdonatoren und deren Aktivatoren) andererseits zu unterschiedlichen Zeitpunkten des Waschprozesses aktiviert werden.

Dieses Ziel ist erreicht worden durch ein Verfahren zum Herstellen eines Vollwaschmitteltuchs nach Anspruch 1, das gekennzeichnet ist durch die folgenden Schritte: (a) Einarbeiten von Sauerstoffdonatoren und deren Aktivatoren in eine von einer ionischen Polymerschicht umgebene Wachsmatrix, um ein Kapselsystem zu erhalten, (b) Einarbeiten des Kapselsystems in eine aus einem Flüssigwaschmittel und einem in Wasser unlöslichen funktionellen Additiv bestehende Dispersion, (c) Aufbringen der mit dem Kapselsystem versehenen Dispersion auf ein bei Raumtemperatur festes Trägersubstrat.

Dieses Ziel ist auch erreicht worden durch ein Verfahren zum Herstellen eines Vollwaschmitteltuchs nach Anspruch 2, das gekennzeichnet ist durch die folgenden Schritte: (a) Einarbeiten von Sauerstoffdonatoren und deren Aktivatoren in eine von einer ionischen Polymerschicht umgebene Wachsmatrix, um ein Kapselsystem zu erhalten, (b) Einarbeiten des Kapselsystems in ein bei Raumtemperatur festes Trägersubstrat, (c) Aufbringen einer aus einem Flüssigwaschmittel und einem in Wasser unlöslichen funktionellen Additiv bestehenden Dispersion auf das mit dem Kapselsystem versehene Trägersubstrat.

Dieses Ziel ist auch erreicht worden durch ein Vollwaschitteltuch nach Anspruch 3, das ein bei Raumtemperatur festes Trägersubstrat sowie eine auf das Trägersubstrat aufgebrachte und aus einem Flüssigwaschmittel und einem in Wasser unlöslichen funktionellen Additiv bestehende Dispersion umfasst und das dadurch gekennzeichnet ist, dass das Vollwaschmitteltuch weiterhin ein in die Dispersion oder direkt in das Trägermaterial eingearbeitetes Kapselsystem umfasst, dass in eine von einer ionischen Polymerschicht umgebene Wachsmatrix eingebrachte Sauerstoffdonatoren und deren Aktivatoren enthält.

Vorteilhafte Ausgestaltungen des erfindungsgemäßen Vollwaschmitteltuchs und seines Herstellungsverfahrens ergeben sich aus den Unteransprüchen.

### Beschreibung der bevorzugten Ausführungsformen

Übliche in Waschmitteln verwendete Bleichmittel (Sauerstoffdonatoren und deren Aktivatoren) sind:
- Perborate
- Wasserstoffperoxid
- Phthalimido-Peroxo-Caproic Acid
- Hypochloride
- TAED (Tetraacethyethylendiamin)
- Chlorate
- Permanganate
- Percarbonate
Übliche in Waschmitteln verwendete Enzyme sind:
- Protelase
- Cellulase
- Lipase
- Amylase

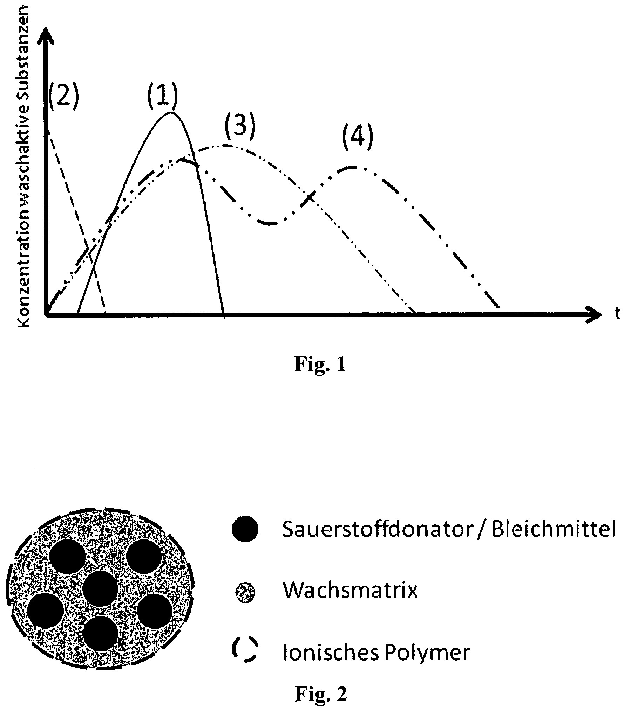

In Fig. 1 ist u.a. die - nicht regulierbare - zeitliche Freisetzung der waschaktiven Substanzen von Fertigdosierwaschmitteln nach dem Stand der Technik gezeigt: (1) ist die Kurve für in kleinen Polymerbeuteln abgefüllte Flüssigwaschmittel, (2) ist die Kurve für mit Fettalkoholen abgemischte Waschmittel und (3) ist die Kurve für das Waschmitteltuch nach der DE 10 2010 060 126 A1. Wie oben erwähnt, sind deshalb miteinander unverträgliche Substanzen wie Enzyme und Bleichmittel (Sauerstoffdonatoren und deren Aktivatoren) in herkömmlichen Waschmitteln nicht miteinander kombinierbar.

Erstaunlicherweise konnte dieses Problem erfindungsgemäß gelöst werden durch die Einarbeitung eines Bleichmittels (Sauerstoffdonatoren und deren Aktivatoren) in eine von einer ionischen Polymerschicht umgebenen Wachsmatrix, sodass die Sauerstoffdonatoen und deren Aktivatoren von der Wachsmatrix und der Polymerschicht umkapselt ist, wie in Fig. 2 gezeigt. Dieses Kapselsystem wird dann in ein Flüssigwaschmittel eingearbeitet, z.B. durch Einrühren.

Beim erfindungsgemäßen Vollwaschmitteltuch wird dieses mit dem Kapselsystem versehene Flüssigwaschmittel in einer Dispersion verwendet, die (wie in der DE 10 2013 014 015 offenbart) auf das Trägersubstrat aufgebracht wird - die Einarbeitung des Kapselsystems in das Flüssigwaschmittel bzw. in die Dispersion erfolgt also vor der Applikation der Dispersion auf das Trägersubstrat. Daneben besteht auch die Möglichkeit, das Kapselsystem im Rahmen einer Vorbehandlung des Trägersubstrats (also vor dem Aufbringen der Dispersion) direkt auf dieses aufzubringen, was z.B. unter Einsatz eines Tauchbeckens oder durch Aufsprühen erfolgen kann.

Die Wachsmatrix hat eine Partikelgröße von bis zu max. 100µm, wobei diese Partikelgröße proportional zur Dauer der Emittierungsphase der aktiven Sauerstoffdonatoren und deren Aktivatoren (Schmelzprozess) ist. Die Aktivierung der Sauerstoffdonatoren und deren Aktivatoren kann durch die Wahl des Matrixmaterials kontrolliert eingestellt werden. Durch die Verwendung der äußeren ionischen Polymerstruktur kann die Adhäsion bzw. Kohäsion der Wachsmatrix an der Oberfläche des Trägersubstrats eingestellt werden.

Auf diese Weise ist erstmals gelungen, eine Waschmittelapplikationsform zu erstellen, die den wirksamen Einsatz von Enzymen und Bleichmitteln (Sauerstoffdonatoren und deren Aktivatoren) erlaubt. Zu Beginn eines Waschgangs werden zunächst direkt die Enzyme freigesetzt, die nachweislich ab ca. 30°C ihre Leistung entfalten und somit zu Beginn des Waschgangs bzw. Reinigungsprozesses zur Verfügung stehen. Unter Verwendung eines Waschprogramms von mindestens 40°C wird die äußere Polymerschicht der Waschmatrix während der weiteren Erwärmung aufgelöst bzw. aufgeschmolzen, und die Sauerstoffdonatoren und deren Aktivatoren werden somit erst zu diesem späteren Zeitpunkt aktiviert, nachdem die Enzyme ihre Wirksamkeit bereits entfaltet haben und durch waschaktiven Abbau oder programmbedingtes Abpumpen (z.B. nach dem Vorwaschgang) evtl. bereits gar nicht mehr vorhanden sind. Dieser zeitliche Verlauf ist als Kurve (4) in Fig. 1 gezeigt. Die zeitliche Funktionsweise der temperaturabhängigen Aktivierung der waschaktiven Substanzen (hier insbesondere der Enzyme und Bleichmittel bzw. Sauerstoffdonatoren und deren Aktivatoren) eines Waschmittels bzw. Vollwaschmitteltuchs ist also gegeben durch die folgenden Schritte:
a) Freisetzung und Aktivierung der Enzyme mittels Auflösung in Wasser ab ca. 30°C
b) Auflösung der Polymerschicht und Wachsmatrix in Abhängigkeit der gewählten Edukte ab 40°C
c) Aktivierung der Sauerstoffdonatoren und deren Aktivatoren

Für die hier beschriebene Wachsmatrix eignen sich insbesondere:
- Bienenwachs
- Sheabutter
- Reiskleiewachs
- Maisstärke
- Kartoffelstärke
- Fettalkohole mittlerer Kettenlänge

Für die Erstellung der Polymerschicht der Wachsmatrix eignen sich insbesondere:
- Linolsäure
- Hydroxyethyl Behenamidopropyl Diamonium Chloride
- Hydroxypropylguarhydroxypropyltriammoniumchloride
- Hydrolisierte Stärke
- Methyllactate
- Methyldiisopropylpropionamide
- Cyclohexanecarboxamide
- Hydrolized Starch Octenylsuccinate
- PVM / MA Copolymer Acrylates / C 12-22 Alkylmethaceylate Copolymer

Durch die erstmals erzielte gesteuerte temperaturabhängige Auflösung der ionischen Polymerschicht und Wachsmatrix der Sauerstoffdonatoren und deren Aktivatoren kann eine zeitabhängige Steuerung der Aktivierung beider Verbindungsklassen innerhalb eines Waschvorgangs realisiert werden. Für die Anwendungsbereiche ergeben sich basierend auf der vorliegenden Erfindung folgende Basisformulierungen für ein Vollwaschmitteltuch:

**Vollwaschmitteltuch (universal):**

| |
|---|
| Anionische Tenside |
| Nichtionische Tenside |
| Phosphonate/Komplexbildner |
| C10-C18 Fettsäuresalze |
| Optische Aufheller |
| Enzyme |
| Builder (Polycarboxylate, Zeolithe, Schichtsilikate) |
| Stabilisatoren (Propylenglykol, Glycerin, Borax, Inulin) |
| Duftstoffe |
| Konservierungsmittel |
| Soil-Release Polymer |
| pH-Regulatoren |

**Farbwaschmitteltuch (Color):**

| |
|---|
| Anionische Tenside |
| Nichtionische Tenside |
| Phosphonate/Komplexbildner |
| C10-C18 Fettsäuresalze |
| Farbstoffe |
| Farbübertragungsschutz |
| Hydrotrope (Natriumcumolsulfonat) |
| Enzyme |
| Builder (Polycarboxylate, Zeolithe, Schichtsilikate) |
| Stabilisatoren (Propylenglykol, Glycerin, Borax, Inulin) |
| Duftstoffe |
| Konservierungsmittel |
| Soil-Release Polymer |
| pH-Regulatoren |

**Schwarzwaschmitteltuch (black):**

| |
|---|
| Anionische Tenside |
| Nichtionische Tenside |
| Phosphonate/Komplexbildner |
| C10-C18 Fettsäuresalze |
| Farbstoffe |
| Farbübertragungsschutz |
| Enzyme |
| Builder (Polycarboxylate, Zeolithe, Schichtsilikate) |
| Stabilisatoren (Propylenglykol, Glycerin, Borax, Inulin) |
| Trübungsmittel |
| Duftstoffe |
| Konservierungsmittel |
| pH-Regulatoren |

**Weißwaschmitteltuch (white):**

| |
|---|
| Anionische Tenside |
| Nichtionische Tenside |
| C10-C18 Fettsäuresalze |
| Optische Aufheller |
| Soil-Release-Polymer |
| Farbübertragungsschutz |
| Enzyme |
| Builder (Polycarboxylate, Zeolithe, Schichtsilikate) |
| Stabilisatoren (Propylenglykol, Glycerin, Borax, Inulin) |
| Farbstoffe |
| Trübungsmittel |
| Duftstoffe |
| Konservierungsmittel |
| pH-Regulatoren |

**Feinwaschmitteltuch:**

| |
|---|
| Anionische Tenside |
| Nichtionische Tenside |
| C10-C18 Fettsäuresalze |
| Phosphonate/Komplexbildner |
| Farbübertragungsschutz |
| Enzyme |
| Builder (Polycarboxylate, Zeolithe, Schichtsilikate) |
| Stabilisatoren (Propylenglykol, Glycerin, Borax, Inulin) |
| Duftstoffe |
| Entschäumer |
| Konservierungsmittel |
| pH-Regulatoren |

**Wollwaschmitteltuch:**

| |
|---|
| Anionische Tenside |
| Nichtionische Tenside |
| amphotere Tenside |
| C10-C18 Fettsäuresalze |
| Phosphonate/Komplexbildner |
| Farbübertragungsschutz |
| Builder (Polycarboxylate, Zeolithe, Schichtsilikate) |
| Duftstoffe |
| Konservierungsmittel |
| Trübungsmittel |
| Conditioner |
| pH-Regulatoren |

Das in Wasser unlösliche funktionelle Additiv der Vollwaschmitteltuch-Dispersion kann ein Zeolith und/oder Schichtsilikat umfassen. Das Flüssigwaschmittel der Dispersion kann über eine Viskosität von größer 500 mPas verfügen. Die Dispersion ist statistisch auf dem Trägersubstrat fixiert.

## Patentansprüche

1. Verfahren zur Herstellung eines Vollwaschmitteltuchs, **gekennzeichnet durch** die folgenden Schritte:
(a) Einarbeiten von Sauerstoffdonatoren und deren Aktivatoren in eine von einer ionischen Polymerschicht umgebene Wachsmatrix, um ein Kapselsystem zu erhalten,
(b) Einarbeiten des Kapselsystems in eine aus einem Flüssigwaschmittel und einem in Wasser unlöslichen funktionellen Additiv bestehende Dispersion,
(c) Aufbringen der mit dem Kapselsystem versehenen Dispersion auf ein bei Raumtemperatur festes Trägersubstrat.

2. Verfahren zur Herstellung eines Vollwaschmitteltuchs, **gekennzeichnet durch** die folgenden Schritte:
(a) Einarbeiten von Sauerstoffdonatoren und deren Aktivatoren in eine von einer ionischen Polymerschicht umgebene Wachsmatrix, um ein Kapselsystem zu erhalten,
(b) Einarbeiten des Kapselsystems in ein bei Raumtemperatur festes Trägersubstrat,
(c) Aufbringen einer aus einem Flüssigwaschmittel und einem in Wasser unlöslichen funktionellen Additiv bestehenden Dispersion auf das mit dem Kapselsystem versehene Trägersubstrat.

3. Vollwaschmitteltuch, umfassend ein bei Raumtemperatur festes Trägersubstrat sowie eine auf das Trägersubstrat aufgebrachte und aus einem Flüssigwaschmittel und einem in Wasser unlöslichen funktionellen Additiv bestehende Dispersion, **dadurch gekennzeichnet, dass** das Vollwaschmitteltuch weiterhin ein in die Dispersion oder direkt in das Trägermaterial eingearbeitetes Kapselsystem umfasst, dass in eine von einer ionischen Polymerschicht umgebene Wachsmatrix eingebrachte Sauerstoffdonatoren und deren Aktivatoren enthält.

4. Vollwaschmitteltuch nach Anspruch 3, **dadurch gekennzeichnet, dass** das in Wasser unlösliche funktionelle Additiv der Dispersion ein Zeolith und/oder Schichtsilikat umfasst.

5. Vollwaschmitteltuch nach Anspruch 3 oder 4, **dadurch gekennzeichnet, dass** das Flüssigwaschmittel der Dispersion über eine Viskosität von größer 500 mPas verfügt.

6. Vollwaschmitteltuch nach einem der Ansprüche 3 - 5, **dadurch gekennzeichnet, dass** die Dispersion statistisch auf dem Trägersubstrat fixiert ist.

## Claims

1. Method for manufacturing a heavy-duty laundry detergent wipe, **characterized by** the following steps:
(a) incorporating oxygen donors and their activators in a waxy matrix which is surrounded by an ionic polymer layer for providing a capsule system,
(b) incorporating the capsule system into a dispersion comprising a liquid washing detergent and a water insoluble functional additive,
(c) applying the dispersion provided with the capsule system to a carrier material which is solid at ambient temperature.

2. Method for manufacturing a heavy-duty laundry detergent wipe, **characterized by** the following steps:
(a) incorporating oxygen donors and their activators in a waxy matrix which is surrounded by an ionic polymer layer for providing a capsule system,
(b) incorporating the capsule system into a carrier material which is solid at ambient temperature,
(c) applying a dispersion comprising a liquid washing detergent and a water insoluble functional additive to the carrier material provided with the capsule system.

3. Heavy-duty laundry detergent wipe, comprising a carrier material which is solid at ambient temperature and a dispersion comprising a liquid washing detergent and a water insoluble functional additive and which has been applied to the carrier material, **characterized in that** the heavy-duty detergent wipe further comprises a capsule system which has been incorporated into the dispersion or directly into the carrier material and which comprises oxygen donors and their activators incorporated into a waxy matrix surrounded by an ionic polymer layer.

4. Heavy-duty laundry detergent wipe according to claim 3, **characterized in that** the water insoluble functional additive comprises a zeolite and/or a phyllosilicate.

5. Heavy-duty laundry detergent wipe according to claim 3 or 4, **characterized in that** the liquid washing detergent of the dispersion has a viscosity greater than 500 mPas.

6. Heavy-duty laundry detergent wipe according to one of the claims 3 - 5, **characterized in that** the dispersion is statistically fixed to the carrier substrate.

## Revendications

1. Procédé de fabrication d'une lingette de lessive tous textiles, **caractérisé par** les étapes suivantes :
(a) incorporation de donneurs d'oxygène et de leurs activateurs dans une matrice de cire entourée d'une couche de polymère ionique, afin d'obtenir un système de capsule,
(b) incorporation du système de capsule dans une dispersion constituée d'une lessive liquide et d'un additif fonctionnel insoluble dans l'eau,
(c) dépôt de la dispersion munie du système de capsule sur un substrat de support solide à la température ambiante.

2. Procédé de fabrication d'une linguette de lessive tous textiles, **caractérisé par** les étapes suivantes :
(a) incorporation de donneurs d'oxygène et de leurs activateurs dans une matrice de cire entourée d'une couche de polymère ionique, afin d'obtenir un système de capsule,
(b) incorporation du système de capsule dans un substrat de support solide à la température ambiante,
(c) dépôt d'une dispersion constituée d'une lessive liquide et d'un additif fonctionnel insoluble dans l'eau sur le substrat de support muni du système de capsule.

3. Lingette de lessive tous textiles, comprenant un substrat de support solide à température ambiante ainsi qu'une dispersion constituée d'une lessive liquide et d'un additif fonctionnel insoluble dans l'eau, **caractérisée en ce que** la lingette tous textiles comprend en outre un système de capsule incorporé dans la dispersion ou directement dans le matériau support, qui contient des donneurs d'oxygène et leurs activateurs incorporés dans une matrice de cire entourée d'une couche de polymère ionique.

4. Lingette de lessive tous textiles selon la revendication 3, **caractérisée en ce que** l'additif fonctionnel de la dispersion insoluble dans l'eau comprend un zéolithe et/ou un phyllosilicate.

5. Lingette de lessive tous textiles selon la revendication 3 ou 4, **caractérisée en ce que** la lessive liquide de la dispersion possède une viscosité supérieure à 500 mPa.

6. Lingette de lessive tous textiles selon l'une des revendications 3 à 5, **caractérisée en ce que** la dispersion est fixée sur le substrat de support de manière statistique.
